# EUROPEAN PATENT SPECIFICATION

(11) **EP 2 862 745 B1**
(45) Date of publication and mention of the grant of the patent: **06.12.2017**
(21) Application number: 13189055.0
(22) Date of filing: 17.10.2013
(51) Int. Cl.: B60N 2/24, B60R 21/231, B60N 2/44

(54) **Mass transit passenger vehicle seat and mass transit passenger vehicle comprising such a seat**
Nahverkehrsfahrzeugsitz und Nahverkehrsfahrzeug mit einem solchen Sitz
Siège de véhicule de passagers de transit de masse et véhicule à passagers de transit de masse comprenant un tel siège

(43) Date of publication of application: 22.04.2015
(73) Proprietor: Iveco France S.A., 69200 Vénissieux (FR)
(72) Inventor: Juliau, Emilien, 69400 Villefranche sur Saone (FR); Mure, Xavier, 69200 Venissieux (FR)
(74) Representative: Franzolin, Luigi

(56) References cited:
- EP-A2- 1 193 115
- WO-A2-2011/089580
- DE-A1-102007 032 449
- DE-C1- 10 043 290
- US-A1- 2009 218 858

## Description

The invention relates to a mass transit passenger vehicle seat and a mass transit passenger vehicle comprising such a seat.

WO2011089580 and DE102007032449 disclose the features of the preamble of claim 1 herewith appended.

Mass transit passenger vehicles, such as buses, are increasingly often equipped with seats suitable for people with reduced mobility. Yet people with reduced mobility need to be kept in place when they are seated, so as to avoid falling. To that end, certain transport vehicles are equipped with arm rests that are rotatably mounted on the seat bottom and prevent a person with reduced mobility from falling off the seat.

However, some bus seats do not include a high enough seat bottom to install an armrest therein. Furthermore, the armrests deteriorate quickly and add to the bulk of the width of the seat.

The invention aims more particularly to resolve these drawbacks by proposing a mass transit passenger vehicle seat that uses means integrated into the seat bottom to prevent people with reduced mobility from falling.

To that end, the invention relates to a mass transit passenger vehicle seat, comprising a seat bottom. According to the invention, said seat comprises a fall prevention device placed on the side of the seat bottom and translatable in a globally vertical position perpendicular to the seat bottom between a first configuration, where it is completely integrated into the seat bottom, and a second configuration, where it protrudes above the seat bottom.

Owing to the invention, an able-bodied person, i.e., a person not needing a fall prevention device, can use the seat by keeping the fall prevention device in the first configuration, i.e., integrated into the seat bottom, and a person with reduced mobility can easily move the fall prevention device above the seat bottom so that his hips are held during transport. In this way, the person does not risk falling off the seat when the bus turns. Additionally, when the fall prevention device is inserted into the seat bottom, it is possible to access the seat from the side. This is in particular important for persons on crutches or in wheelchairs, as it makes it easier for them to access the seat.

According to advantageous but optional aspects of the invention, a mass transit passenger vehicle seat may incorporate one or more of the following features, considered in any technically allowable combination:
- The fall prevention device is telescoping, i.e., it is made up of several parts that slide in one another.
- The fall prevention device comprises a first part that is integrated stationary into the seat bottom, a second part that is capable of sliding in the first part, and a third part that is capable of sliding in the second part.

- The first part and the third part are each provided with a rack cooperating with a pinion borne by the second part, the upward movement of the third part causing the upward movement of the second part relative to the first part.
- The fall prevention device comprises first means for guiding the sliding of the third part relative to the second part and second means for guiding the sliding of the second part relative to the first part.
- The first guide means are formed by at least one bar supported by the third part that is inserted into a slot of the second part, said slot extending parallel to the direction of movement of the device, and the second guide means are formed by at least one bar borne by the second part, which is inserted into a slot of the first part, said slot extending parallel to the direction of movement of the device.
- The seat comprises means for locking the fall prevention device in the second configuration.
- The locking means comprise a click, which is borne by the second part and which is positioned in a recess of the third part, said recess comprising a smooth part and a notched part, during raising, the click is located in a first position where it is engaged in the notches of the notched part of the recess, the notches are oriented such that it is impossible to lower the device without disengaging the click from the notches.
- The recess of the third part includes, in the lower part, a protruding part against which the click abuts at the end of travel during raising of the fall prevention device, the click then switching in contact with that protruding part from the first position to a second position in which it is disengaged from the notches, i.e., in which it is against the smooth part.
- The recess of the third part includes, in the upper part, a housing with a circular profile that receives the click at the end of travel during lowering of the fall prevention device, the click then switching in contact with that housing from the second position to the first position to engage in the notches of the notched part of the recess.
- The device comprises a spring that connects a slug of the click to a finger of the second part, said spring exerting an elastic force keeping the click in its first or second position.
- The fall prevention device includes, in the upper part, a strip that extends parallel on the side of the seat bottom.
- The edge of the seat on the side of which the fall prevention device is placed comprises a housing for accessing the strip, making it possible to pull the fall prevention device upward when the latter is in its first configuration.
- When the fall prevention device is in its first configuration, the strip is flush with the seat bottom.

The invention also relates to a mass transit passenger vehicle comprising at least one seat as previously described.

The invention and other advantages thereof will be better understood in light of the following description of one embodiment of a mass transit passenger vehicle seat according to its principle, provided solely as an example and done in reference to the drawings, in which:
- figure 1 is a perspective view of a mass transit passenger vehicle seat according to the invention, shown in a configuration where a fall prevention device is in a lowered configuration, where it is integrated into a seat bottom of the seat,
- figure 2 is a perspective view similar to figure 1, in which the fall prevention device is in an upper configuration, where it protrudes above the seat bottom,
- figure 3 is an enlarged perspective view of the fall prevention device of figure 2,
- figure 4 is an exploded perspective view of a first part belonging to the fall prevention device of figure 3,
- figure 5 is an exploded perspective view of a second part belonging to the fall prevention device of figure 3,
- figure 6 is an exploded perspective view of a third part belonging to the fall prevention device of figure 3,
- figures 7 to 9 successively show views with a cutaway, which illustrates steps for raising the fall prevention device from the configuration of figure 1 to the configuration of figure 2,
- figure 10 is an enlarged view of insert X of figure 9, and
- figure 11 is an enlarged view of insert XI of figure 7.

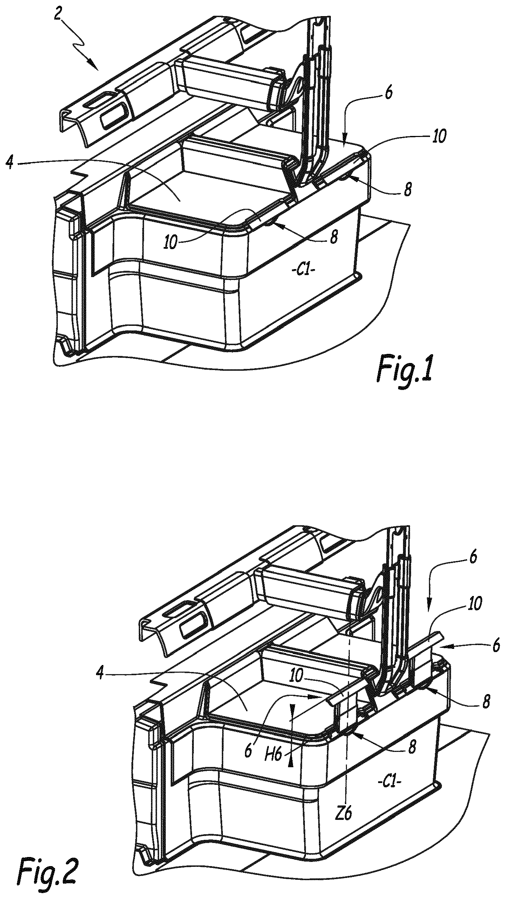

Figure 1 shows a mass transit passenger vehicle seat 2. The seat 2 comprises a seat bottom 4 and a fall prevention device 6. In the configuration of figure 1, the fall prevention device 6 is in a lowered configuration where it is completely integrated into the seat bottom 4. More specifically, the fall prevention device 6 is located in a niche, or indentation, of the seat bottom 4 that is not visible in the figures. It includes a strip 10 that extends parallel to the seat bottom 4 and is flush with the seat bottom 4 in that configuration. Thus, the fall prevention device 6 does not affect the aesthetic appearance of the seat 2.

In the figures, the seat 2 is placed on the edge of an aisle. A side C1 of the seat 2 is defined turned toward the aisle, that side C1 delimiting a hollow housing 8 at the fall prevention device 6. Said hollow housing 8 forms an access to the strip 10 of the fall prevention device 6. In this way, the user can pull on the strip 10 by placing his hand in the hollow housing 8 and raising the fall prevention device 6. The movement of the fall prevention device 6 is done in a vertical direction Z6 perpendicular to the seat bottom 4. The fall prevention device 6 is therefore brought into an upper configuration, which is shown in figure 2, where it protrudes above the seat bottom.

In the lowered configuration, it is possible to sit from the front or the side C1 on the seat 2, which is practical for installing people in wheelchairs or on crutches. In the upper configuration, the device 6 serves to laterally hold a person whose legs hang over the front. In the configuration of figure 2, the fall prevention device 6 protrudes above the seat bottom 4 by a height H6 greater than 50 mm, preferably smaller than 200 mm.

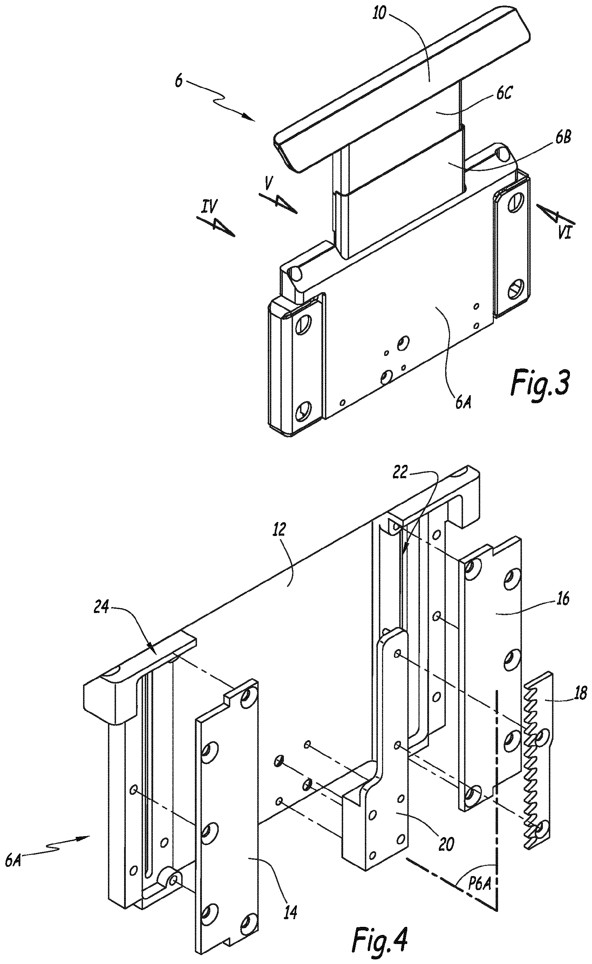

Furthermore, figures 4 to 6 are respectively considered in the directions of arrows IV, V and VI in figure 3.

As shown in figure 3, the fall prevention device 6 comprises three parts respectively referenced 6A, 6B and 6C. In the raised configuration of the fall prevention device 6, the part 6A is positioned below the part 6B, which is positioned below the part 6C. In practice, the part 6A is permanently mounted in the housing of the seat 2. In other words, the part 6A is always integrated into the seat bottom 4.

As shown in figure 4, the part 6A of the fall prevention device 6 is globally symmetrical relative to a median plane P6A. It comprises a rectangular plate 12 on which two small plates 14 and 16 are laterally fixed, said small plates also being rectangular and being positioned symmetrically relative to the plane P6A. The plate 12 comprises two axial slots 22 and 24 that extend parallel to the axis Z6 and that are positioned laterally with respect to the plate 12, respectively at the same level as the small plates 16 and 14. At the center of the plate 12, a support 20 is fixed that bears a rack 18, said rack 18 extending parallel to the axis Z6.

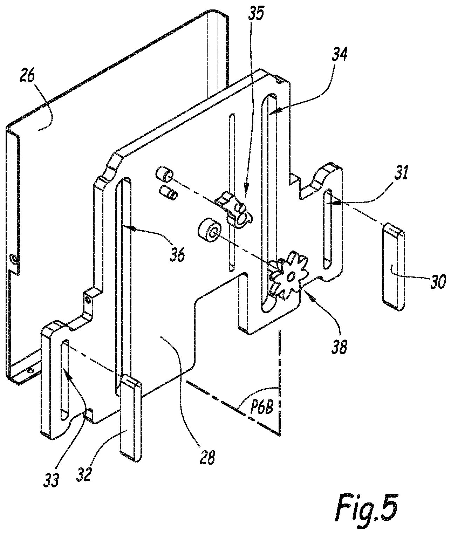

As shown in figure 5, the part 6B of the fall prevention device 6 is also globally symmetrical relative to a median plane P6B and comprises a rectangular plate 26 on which a part 28 is fixed. The part 28 comprises, on its two opposite side edges, two through housings 31 and 33 that extend parallel to the axis Z6 and that are positioned symmetrically relative to the median plane P6B. The part 6B also comprises bars 30 and 32 that are respectively inserted into the housings 31 and 33 of the part 28. In the assembled configuration of the part 6B, the bars 30 and 32 protrude from the surface of the part 28. Inside the housings 31 and 33, i.e., approaching the median plane P6B, the part 28 comprises two through slots 36 and 34 that are positioned symmetrically relative to the median plane P6B and extend parallel to the axis Z6 over practically the entire height of the part 28. Between the slots 34 and 36, a toothed pinion 38 and a click 35 are pivotably mounted.

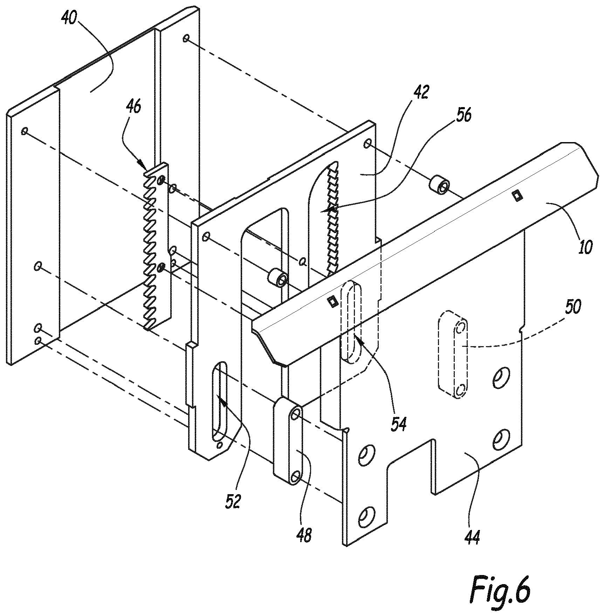

As shown in figure 6, the part 6C of the fall prevention device 6 comprises three main parts, respectively referenced 40, 42 and 44, that are plates fixed to one another by screws that are not shown. In the assembled configuration of the part 6C, the plate 42 is positioned between the plate 40 and the plate 44. The plate 42 laterally delimits two slots 52 that extend, parallel to the axis Z6, over approximately one third of the height of the plate 42. The bars 48 and 50 are respectively inserted into the slots 52 and 54 and protrude laterally toward the outside of the plate 42, toward the plate 40. The plate 42 also delimits a cutout, or recess, 56. Furthermore, the plate 50 bears, in the upper part, the strip 50, which serves as a handle to lift the fall prevention device 6. Lastly, the part 6C also comprises a rack 46 that extends parallel to the axis Z6.

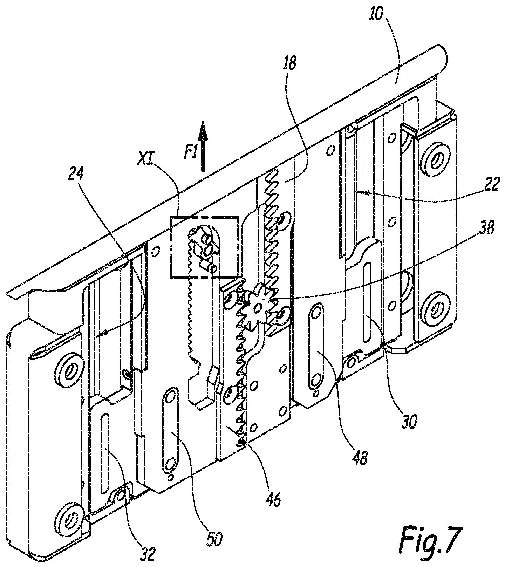

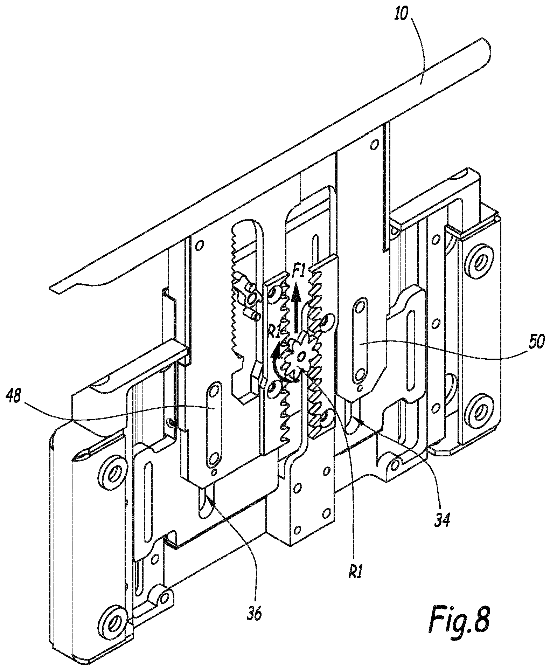

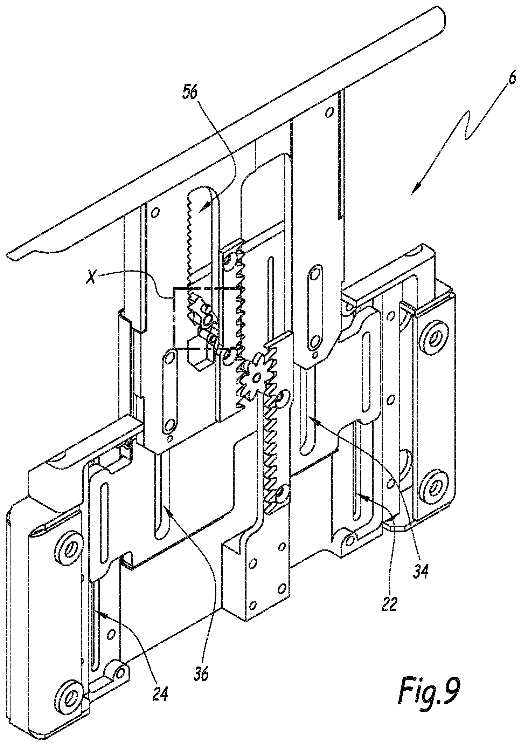

In the assembled state of the fall prevention device 6, i.e., in the configurations of figures 7 to 9, the bars 30 and 32 of the part 6B are respectively engaged in the slots 22 and 24 of the part 6A. Likewise, the bars 48 and 50 of the part 6C are respectively inserted in the slots 36 and 34 of the part 6B. The bars 30 and 32 therefore form, with the slots 22 and 24, means for guiding the translation of the part 6B relative to the part 6A, along the vertical axis Z6. Similarly, the bars 48 and 50 form, with the slots 34 and 36, means for guiding the part 6C relative to the part 6B, along the vertical axis Z6.

Furthermore, the pinion 38 cooperates on the one hand with the rack 18 of the stationary part 6A, and on the other hand with the moving rack 46 of the part 6C. Thus, the pinion 38 is positioned between the rack 18, which is stationary, and the rack 46, which is movable.

To raise the fall prevention device 6, the strip 10 is grasped by inserting a hand into the hollow housing 8 of the seat and pulling upward, as shown by arrow F1 in figure 7. Thus, the rack 46 of the part 6C is lifted and causes the pinion 38 to rotate around an axis perpendicular to the part 28, as shown by arrow R1. The pinion 38 then moves along the stationary rack 18, which causes the part 6B to be translated in the vertical direction Z6. The part 6C slides in the part 6B, which in turn slides relative to the part 6A. The fall prevention device 6 is therefore telescopically movable. This makes it possible to obtain a compact shape when it is folded, i.e., in the configuration of figure 7, while offering the desired height to lean one's elbows or hold the hips of a person with reduced mobility. The fall prevention device 6 is therefore easier to integrate into the seat bottom, as it takes up very little space when it is folded.

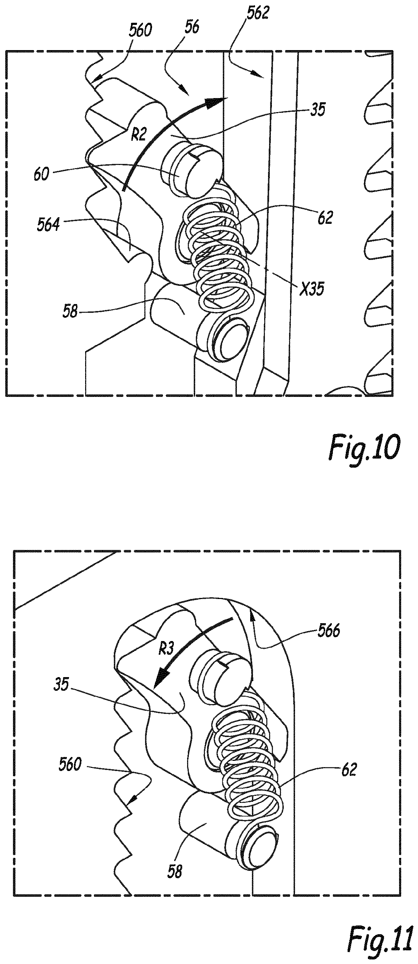

Furthermore, the click 35 of the part 6B of the fall prevention device 6 is inserted into the recess 56. The recess 56 extends parallel to the axis Z6 and includes a notched part 560 on one side and a smooth part 562 on the other side. As shown in figure 10, during raising of the fall prevention device 6, the click 35 is in a first position where it is engaged in the notched part 560 of the housing 56. The notches of this part 560 are oriented such that it is impossible to lower the fall prevention device 6 without disengaging the click 35 from the notches 560. The click 35 therefore forms, with the recess 56 of the part 6C, means for locking the fall prevention device 6 in the upper position, i.e., in the configuration where it protrudes above the seat bottom. Consequently, the device 6 does not risk lowering during travel, which ensures safety for a person with reduced mobility. When the click 35 rises, it therefore goes from one notch to the next until it reaches a protruding part 564 of the housing 56. The fall prevention device is then in the upper position.

The click 35 is pivotably mounted on the part 6B of the fall prevention device 6. More specifically, the click 35 can pivot around an axis X35 perpendicular to the part 28 and the axis Z6. The click 35 bears a slug 60 and the part 6B of the fall prevention device 6 bears a finger 58 that is positioned below the click 35. A spring 62 is fixed between the slug 60 and the finger 58. Thus, a first end of the spring is fixed to the slug 60 and a second end is fixed to the finger 58. This spring 62 opposes resistance against the tilting of the click 35 around the axis X35.

When the fall prevention device 6 is lowered, the part 6C should be pulled upward, so as to disengage the click 35 from the notches 560. By pulling the device 6 upward, the click 35 reaches the end of travel within the housing 56 and abuts against the protruding part 564. It then tilts, around its axis X35, in a direction R2 against the action of the spring 62. In fact, this tilting movement R2 tends to elongate the spring 62. This spring 62 makes it possible to keep the click 35 in position, i.e., it prevents the click from tilting around the axis X35 unless it comes into contact with the protruding part 564. The click 35 switches toward a second position where it is wedged against the smooth part 562 of the recess 56 and where it can therefore slide along that part 562. Once the click 35 has switched, the spring 62 compresses again and keeps the click 35 in that position. Thus, it is possible to lower the fall prevention device 6, since the click 35 is disengaged from the notches 560.

When the part 6C of the fall prevention device 6 reaches the end of travel, i.e., in the configuration of figure 7, the click 35 comes into contact with a housing, or contour with a circular profile 566 delimited in the upper part of the housing 56. The contact between the click 35 and the contour 566 causes the click 35 to tilt R3 around its axis X35. This tilting R3 tends to elongate the spring 62 and is opposed against the tilting R2, with the result that the click 35 returns to a position where it is engaged in the notches 560 of the housing 56. Likewise, once the tilting is done, the spring 62 compresses again and keeps the click 35 engaged in the notches 560, all throughout rising. In summary, the spring 62 keeps the click 35 in a position where it is engaged in the notches 560 and a position where it has switched and where it is wedged against the smooth part 562 of the recess 56. This makes it possible to prevent the click 35 from tilting in an untimely manner during movement of the device 6 and locks the movement.

When the device 6 is completely lowered, it is hidden in the seat bottom. As a result, the device 6 is retractable into the seat bottom 4 of the seat 2, which is particularly practical when it is used for able-bodied persons who wish to sit on the seat 2.

In one alternative that is not shown, other means for locking the fall prevention device 6 in the upper position may be considered.

In one alternative that is not shown, the fall prevention device 6 may be formed by a number of parts other than three, for example greater than four.

The technical features of the alternatives and embodiments considered above may be combined to provide new embodiments of the invention.

## Claims

1. A mass transit passenger vehicle seat (2), comprising a seat bottom (4) **characterized in that** it comprises a fall prevention device (6) placed on the side (C1) of the seat bottom (4) and translatable in a globally vertical position (Z6) perpendicular to the seat bottom between:
a first configuration, where it is completely integrated into the seat bottom, and
a second configuration, where it protrudes above the seat bottom
wherein
the fall prevention device (6) is telescoping, **characterized in that** the fall prevention device (6) comprises a first part (6A) that is integrated stationary into the seat bottom (4), a second part (6B) that is capable of sliding in the first part, and a third part (6C) that is capable of sliding in the second part **and in that** the first part (6A) and the third part (6C) are each provided with a rack (18, 48) cooperating with a pinion (38) borne by the second part (6B), the upward movement of the third part causing the upward movement of the second part relative to the first part.

2. The seat according to claim 1, **characterized in that** the fall prevention device (6) comprises first means (48, 50, 34, 36) for guiding the sliding of the third part relative to the second part and second means (30, 32, 22, 24) for guiding the sliding of the second part relative to the first part.

3. The seat according to claim 2, **characterized in that**:
the first guide means are formed by at least one bar (48, 50) supported by the third part that is inserted into a slot (34, 36) of the second part, said slot extending parallel to the direction of movement of the device, and
the second guide means are formed by at least one bar (30, 32) borne by the second part, which is inserted into a slot (22, 24) of the first part, said slot extending parallel to the direction of movement of the device.

4. The seat according to one of the preceding claims, **characterized in that** it comprises means (35, 56) for locking the fall prevention device in the second configuration (figure 2).

5. The seat according to claim 4, **characterized in that**:
the locking means comprise a click (35), which is borne by the second part (6B) and which is positioned in a recess (56) of the third part (6C), said recess comprising a smooth part (562) and a notched part (560),
- during raising, the click is located in a first position where it is engaged in the notches of the notched part of the recess,
- the notches are oriented such that it is impossible to lower the device (6) without disengaging the click from the notches.

6. The seat according to claim 5, **characterized in that** the recess (56) of the third part (6C) includes, in the lower part, a protruding part (564) against which the click abuts at the end of travel during raising of the fall prevention device (6), the click then switching in contact with that protruding part from the first position to a second position in which it is disengaged from the notches (560), i.e., in which it is against the smooth part (562).

7. The seat according to claim 6, **characterized in that** the recess (56) of the third part (6C) includes, in the upper part, a housing with a circular profile (566) that receives the click (35) at the end of travel during lowering of the fall prevention device, the click then switching in contact with that housing from the second position to the first position to engage in the notches of the notched part (560) of the recess.

8. The seat according to one of claims 6 and 7, **characterized in that** the device (6) comprises a spring (62) that connects a slug (60) of the click (34) to a finger (58) of the second part (6B), said spring exerting an elastic force keeping the click in its first or second position.

9. The seat according to one of the preceding claims, **characterized in that** the fall prevention device (6) includes, in the upper part, a strip (10) that extends parallel on the side (C1) of the seat bottom (4).

10. The seat according to claim 9, **characterized in that** the edge of the seat on the side of which the fall prevention device is placed comprises a housing (8) for accessing the strip (10), making it possible to pull the fall prevention device upward when the latter is in its first configuration.

11. The seat according to one of claims 9 and 10, **characterized in that**, when the fall prevention device (6) is in its first configuration (figure 1), the strip (10) is flush with the seat bottom (4).

12. A mass transit passenger vehicle comprising at least one seat (2) according to one of the preceding claims.

## Patentansprüche

1. Nahverkehrsfahrzeugsitz (2), umfassend eine Sitzfläche (4), **gekennzeichnet durch** eine Fallschutzvorrichtung (6), die auf der Seite (C1) der Sitzfläche (4) angeordnet ist und in einer im wesentlichen vertikalen Position (26) senkrecht zu der Sitzfläche verschiebbar ist zwischen:
- einer ersten Anordnung, in welcher sie vollständig in die Sitzfläche integriert ist, und
- einer zweiten Anordnung, in welcher sie über die Sitzfläche hinausragt,
wobei die Fallschutzvorrichtung (6) teleskopierbar ist, **dadurch gekennzeichnet,** dass die Fallschutzvorrichtung selbst einen ersten Teil (6A) umfasst, der stationär in die Sitzfläche (4) integriert ist, einen zweiten Teil (6B), der in dem ersten Teil bleiben kann, und einen dritten Teil (6C), der in den zweiten Teil gleiten kann, und dass der erste Teil (6A) und der dritte Teil (6C) jeweils mit einer Schiene (18,48) versehen sind, die mit einem Ritzel (38) zusammenwirkt, das von dem zweiten Teil (6B) getragen wird, wobei eine Aufwärtsbewegung des dritten Teils die Aufwärtsbewegung des zweiten Teils relativ zum ersten Teil verursacht.

2. Sitz gemäß Anspruch 1, **dadurch gekennzeichnet, dass** die Fallschutzvorrichtung (6) erste Mittel (48,50,34,36) zur Führung der Gleitbewegung des dritten Teils relativ zu dem zweiten Teil und zweite Mittel (30,32,22,24) zur Führung der Gleitbewegung des zweiten Teils relativ zum ersten Teil umfasst.

3. Sitz gemäß Anspruch 2, **dadurch gekennzeichnet, dass**
die ersten Führungsmittel gebildet werden durch zumindest eine Stange (48,50), die von dem dritten Teil gelagert wird, welche in einen Schlitz (34,36) des zweiten Teils eingesetzt ist, welcher Schlitz sich parallel zu der Bewegungsrichtung der Vorrichtung erstreckt, und,
die zweiten Führungsmittel gebildet werden durch zumindest eine Stange (30,32), die von dem zweiten Teil getragen wird, welche in einen Schlitz (22,24) des ersten Teils eingesetzt ist, welcher Schlitz sich parallel zu der Bewegungsrichtung der Vorrichtung erstreckt.

4. Sitz gemäß einem der vorhergehenden Ansprüche, **dadurch gekennzeichnet, dass** dieser Mittel (35,56) zur Verriegelung der Fallschutzrichtung in der zweiten Anordnung (Fig. 2) umfasst.

5. Sitz gemäß Anspruch 4, **dadurch gekennzeichnet, dass**
die Verbindungsmittel eine Raste (35) umfassen, welche von dem zweiten Teil (6B) getragen wird und welche in einer Ausnehmung (56) des dritten Teils (6C) angeordnet ist, welche Ausnehmung einen Gleitteil (562) und einen eingekerbten Teil (560) umfasst,
wobei während des Anhebens die Raste in einer ersten Position angeordnet ist, in welcher sie in die Kerben des eingekerbten Teils der Ausnehmung einrastet,
und die Kerben so ausgerichtet sind, dass es unmöglich ist, die Vorrichtung (6) abzusenken, ohne die Raste aus den Kerben zu lösen.

6. Sitz gemäß Anspruch 5, **dadurch gekennzeichnet, dass** die Ausnehmung (56) des dritten Teils (6C) in dem unteren Teil einen vorspringenden Teil (564) umfasst, gegen welchen die Raste am Ende des Weges während des Anhebens der Fallschutzvorrichtung (6) anschlägt, wobei die Raste dann in Kontakt mit diesem vorspringenden Teil aus der ersten Position in eine zweite Position schaltet, in welcher sie aus den Kerben (560) gelöst ist, d. h. in welcher sie gegen den leitenden Teil (562) liegt.

7. Sitz gemäß Anspruch 6, **dadurch gekennzeichnet, dass** die Ausnehmung (56) des dritten Teils (6C) in dem oberen Teil ein Gehäuse mit einem kreisförmigen Profil (166) umfasst, welches die Raste (35) am Ende des Weges während des Absenkens der Fallschutzvorrichtung aufnimmt, welche Raste dann in Kontakt mit diesem Gehäuse aus der zweiten Position in die erste Position schaltet, um mit den Kerben des eingekerbten Teils (560) der Ausnehmung zu geraten.

8. Sitz gemäß einem der Ansprüche 6 und 7, **dadurch gekennzeichnet, dass** die Vorrichtung (6) eine Feder (62) umfasst, die einen Ansatz (60) der Raste (34) mit einem Finger (58) des zweiten Teils (6B) verbindet, welche Feder eine elastische Kraft ausübt, welche die Raste in der ersten oder der zweiten Position hält.

9. Sitz gemäß einem der vorhergehenden Ansprüche, **dadurch gekennzeichnet, dass** die Fallschutzvorrichtung (6) in dem oberen Teil einen Streifen (10) umfasst, der sich parallel auf der Seite (C1) der Sitzfläche (4) erstreckt.

10. Sitz gemäß Anspruch 9, **dadurch gekennzeichnet, dass** die Kante des Sitzes auf der Seite, auf welcher die Fallschutzvorrichtung angeordnet ist, ein Gehäuse (8) zur Aufnahme des Streifens (10) umfasst, was es ermöglicht, die Fallschutzvorrichtung nach oben zu ziehen, wenn letztere sich in der ersten Anordnung befindet.

11. Sitz gemäß einem der Ansprüche 9 und 10, **dadurch gekennzeichnet, dass** dann, wenn die Fallschutzvorrichtung (6) in ihrer ersten Anordnung (Fig. 1) befindet, der Streifen (10) bündig mit der Sitzfläche (4) ist.

12. Nahverkehrsfahrzeug, umfassend zumindest einen Sitz (2) gemäß einem der vorhergehenden Ansprüche.

## Revendications

1. Siège de véhicule de transport en commun de passagers (2) comprenant une assise (4), **caractérisé en ce qu'**il comprend un dispositif de prévention des chutes (6) placé sur le côté (C1) de l'assise (4) et déplaçable dans une position globalement verticale (Z6) perpendiculaire à l'assise enture :
une première configuration dans laquelle il est entièrement intégré dans l'assise, et
une seconde configuration dans laquelle il fait saillie au-dessus de l'assise,
dans lequel
le dispositif de prévention des chutes (6) est télescopique, **caractérisé en ce que** le dispositif de prévention des chutes (6) comprend une première partie (6A) qui est intégrée de manière fixe dans l'assise (4), une deuxième partie (6B) qui est capable de coulisser dans la première partie, et une troisième partie (6C) qui est capable de coulisser dans la deuxième partie, et **en ce que** la première partie (6A) et la troisième partie (6C) sont chacune dotées d'un râtelier (18, 48) qui coopère avec un pignon (38) supporté par la deuxième partie (6B), le déplacement ascendant de la troisième partie provoquant le déplacement ascendant de la deuxième partie par rapport à la première partie.

2. Siège selon la revendication 1, **caractérisé en ce que** le dispositif de prévention des chutes (6) comprend des premiers moyens (48, 50, 34, 36) pour guider le coulissement de la troisième partie par rapport à la deuxième partie et des seconds moyens (30, 32, 22, 24) pour guider le coulissement de la deuxième partie par rapport à la première partie.

3. Siège selon la revendication 2, **caractérisé en ce que** :
les premiers moyens de guidage sont formés par au moins une barre (48, 50) supportée par la troisième partie, qui est insérée dans une fente (34, 36) de la deuxième partie, ladite fente s'étendant parallèlement à la direction de déplacement du dispositif ; et
les seconds moyens de guidage sont formés par au moins une barre (30, 32) supportée par la deuxième partie, qui est insérée dans une fente (22, 24) de la première partie, ladite fente s'étendant parallèlement à la direction de déplacement du dispositif.

4. Siège selon l'une des revendications précédentes, **caractérisé en ce qu'**il comprend des moyens (35, 56) pour verrouiller le dispositif de prévention des chutes dans la seconde configuration (figure 2).

5. Siège selon la revendication 4, **caractérisé en ce que** :
les moyens de verrouillage comprennent un cliquet (35) qui est supporté par la deuxième partie (6B) et qui est positionné dans un évidement (56) de la troisième partie (6C), ledit évidement comprenant une partie lisse (562) et une partie crantée (560),
lors du soulèvement, le cliquet est situé dans une première position dans laquelle il s'engage dans les crans de la partie crantée de l'évidement ;
les crans sont orientés de telle sorte qu'il est impossible d'abaisser le dispositif (6) sans désolidariser le cliquet des crans.

6. Siège selon la revendication 5, **caractérisé en ce que** l'évidement (56) de la troisième partie (6C) comprend, dans la partie inférieure, une partie faisant saillie (564) contre laquelle le cliquet vient en butée à la fin de la course pendant le soulèvement du dispositif de prévention des chutes (6), le cliquet passant ensuite en contact avec ladite partie faisant saillie, de la première position à une seconde position dans laquelle il est désolidarisé des crans (560), autrement dit dans laquelle il est situé contre la partie lisse (562).

7. Siège selon la revendication 6, **caractérisé en ce que** l'évidement (56) de la troisième partie (6C) comprend, dans la partie supérieure, un logement avec un profil circulaire (566) qui reçoit le cliquet (35) à la fin de la course pendant l'abaissement du dispositif de prévention des chutes, le cliquet passant ensuite en contact avec ledit logement, de la seconde position à la première position, pour s'engager dans les crans de la partie crantée (560) de l'évidement.

8. Siège selon l'une des revendications 6 et 7, **caractérisé en ce que** le dispositif (6) comprend un ressort (62) qui relie un manchon (60) du cliquet (34) à un doigt (58) de la deuxième partie (6B), ledit ressort exerçant une force élastique maintenant le cliquet dans sa première ou sa seconde position.

9. Siège selon l'une des revendications précédentes, **caractérisé en ce que** le dispositif de prévention des chutes (6) comprend, dans la partie supérieure, une languette (10) qui s'étend parallèlement sur le côté (C1) de l'assise (4).

10. Siège selon la revendication 9, **caractérisé en ce que** le rebord du siège sur le côté duquel est placé le dispositif de prévention des chutes comprend un logement (8) pour accéder à la languette (10), permettant ainsi de tirer le dispositif de prévention des chutes vers le haut lorsque ce dernier se trouve dans sa première configuration.

11. Siège selon l'une des revendications 9 et 10, **caractérisé en ce que**, lorsque le dispositif de prévention des chutes (6) se trouve dans sa première configuration (figure 1), la languette (10) est alignée avec l'assise (4).

12. Véhicule de transport en commun de passagers comprenant au moins un siège (2) selon l'une des revendications précédentes.
